# EUROPEAN PATENT APPLICATION

(11) **EP 4 756 992 A1**
(43) Date of publication of application: **10.06.2026**
(21) Application number: 24847540.2
(22) Date of filing: 19.02.2024
(51) Int. Cl.: H01M 10/613

(54) **HEAT EXCHANGE STRUCTURE, BATTERY PACK AND ELECTRIC DEVICE**

(30) Priority: 31.07.2023 CN 202322046003 U
(71) Applicant: BYD Company Limited, Shenzhen, Guangdong 518118 (CN)
(72) Inventor: FU, Jing, Shenzhen, Guangdong 518118 (CN); ZHANG, Haitao, Shenzhen, Guangdong 518118 (CN); ZHU, Tingting, Shenzhen, Guangdong 518118 (CN); ZHU, Junjie, Shenzhen, Guangdong 518118 (CN); LIN, Xueye, Shenzhen, Guangdong 518118 (CN)
(74) Representative: Mathys & Squire
(86) International application number: PCT/CN2024/077523
(87) International publication number: WO 2025/025571

(57) **Abstract**

A heat exchange structure, a battery pack and an electric device. The heat exchange structure comprises a first plate and a second plate, wherein the first plate is provided with a first recess, the first recess has a first bottom wall and a first side wall; and the second plate is provided with a second recess, the second recess has a second bottom wall and a second side wall, the first bottom wall and the second bottom wall are at least partially spaced apart so as to form a flow channel, the first side wall is connected to the second side wall, and the first recess of the first plate is configured to contain battery cells.

## Description

### CROSS-REFERENCE TO RELATED APPLICATIONS

The present application is based on the Chinese Patent Application with application number 202322046003.6 and application date of July 31, 2023, and claims priority to this Chinese Patent Application. The entire content of this Chinese Patent Application is hereby incorporated into this application by reference.

### FIELD

The present application relates to the field of battery technology, particularly to a heat exchange structure, a battery pack and an electric device.

### BACKGROUND

In the prior art, power batteries typically utilize coolers welded to a tray-type profile frame to dissipate heat from the cells. The tray is usually constructed from aluminum-alloy extruded profiles through welding. However, the tray's structural profile frame is heavy, expensive, and the weld seam between the cooler and the tray suffers from poor air tightness.

### SUMMARY

The objective of this application is to provide a new technical solution for a heat exchange structure, a battery pack and an electric device, which can at least solve the problems in the prior art of the need for separate trays, resulting in a heavy overall structure and high cost.

According to the heat exchange structure provided in this application, it includes: a first plate, a first recess being arranged in the first plate, the first recess having a first bottom wall and a first side wall; a second plate, a second recess being arranged in the second plate, the second recess having a second bottom wall and a second side wall, the first bottom wall and the second bottom wall being at least partially spaced apart to form a flow channel, the first side wall being connected to the second side wall, and the first recess of the first plate being configured to contain battery cells.

In addition, the vehicle according to the above embodiments of the present application may further have the following additional technical features:

According to an embodiment of this application, a protrusion is arranged at the second bottom wall, the protrusion abutting against the first bottom wall, and the first bottom wall and the protrusion being at least partially spaced apart to form the flow channel.

According to an embodiment of this application, a flow channel groove is arranged on the protrusion, and the flow channel groove and the first bottom wall jointly define the flow channel.

According to an embodiment of this application, the protrusions are a plurality in number, and each protrusion extends along a curve of the second bottom wall.

According to an embodiment of this application, a part of the second bottom wall excluding the protrusion is spaced apart from the first bottom wall to form a cavity, and a filler is arranged inside the cavity.

According to an embodiment of this application, the first side wall and the second side wall are partially spaced apart, and the second bottom wall and the second side wall cooperate with the first bottom wall and the first side wall to form the annular cavity, the filler is an annular filling block corresponding to the annular cavity.

According to an embodiment of this application, a side of the second bottom wall facing away from the first bottom wall is formed with a recessed area corresponding to the protrusion, and a cushioning member is arranged within the recessed area.

According to an embodiment of this application, the side of the second bottom wall facing away from the first bottom wall is formed with a recessed area corresponding to the protrusion, a cushioning member is arranged on the side of the second bottom wall facing away from the first bottom wall, and a part of the cushioning member is located within the recessed area.

According to an embodiment of this application, the heat exchange structure further includes a bottom guard plate, and the bottom guard plate is connected to the side of the second bottom wall facing away from the first bottom wall.

According to an embodiment of this application, the bottom guard plate is fixedly connected to a part of the second bottom wall excluding the recessed area, and the bottom guard plate abuts against the cushioning member.

According to an embodiment of this application, a first protruding edge extending away from the first recess is arranged on the first side wall, a second protruding edge extending away from the second recess is arranged on a second side wall of the second plate, and the first protruding edge and the second protruding edge are connected and configured for connecting to external structures.

According to an embodiment of this application, the second protruding edge is arranged on a side of the first protruding edge close to the second bottom wall, the first protruding edge and the second protruding edge are arranged opposite each other, and the first protruding edge and the second protruding edge are fixedly connected.

According to a battery pack provided in this application, it includes the heat exchange structure described in the above embodiments.

According to an embodiment of this application, the battery pack further includes: a battery cell, which is installed and arranged within the first recess; a cover plate, wherein the cover plate is covered on the first plate.

According to an electric device provided in this application, it includes the heat exchange structure described in the above embodiments; or it includes the battery pack described in the above embodiments.

In the heat exchange structure of this application, by arranging a first recess on the first plate and a second recess on the second plate, the first bottom wall of the first recess and the second bottom wall of the second recess are spaced apart to form a flow channel, and the first plate and the second plate constitute a cooler. At the same time, the battery cells are placed in the first recess to achieve cooling and heat dissipation. The first plate and the second plate are integrated into a heat exchange structure with dual functions of a tray and a cooler, eliminating the tray structure, reducing weight and cost, and improving the air tightness of the heat exchange structure.

Through the detailed description of the exemplary embodiments of the present application with reference to the accompanying drawings, other features and advantages of the present application will become clear.

### BRIEF DESCRIPTION OF THE DRAWINGS

The accompanying drawings incorporated in and constituting a part of the specification illustrate embodiments of the present application and, together with the description, serve to explain the principles of the present application.
FIG. 1 shows a schematic diagram of a heat exchange structure according to an embodiment of the present application;
FIG. 2 shows an exploded schematic diagram of a heat exchange structure according to an embodiment of the present application;
FIG. 3 shows another schematic diagram of a heat exchange structure according to an embodiment of the present application;
FIG. 4 shows a cross-sectional diagram taken along line A-A in FIG. 3;
FIG. 5 shows a partial enlarged diagram of Area B in FIG. 4;
FIG. 6 shows a partial enlarged diagram of Area C in FIG. 4;

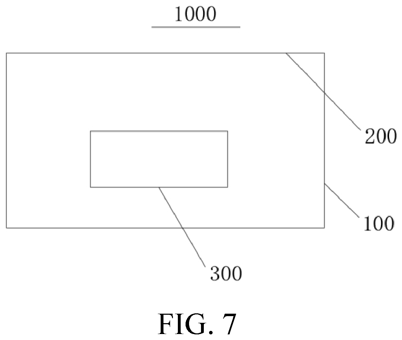

FIG. 7 shows a schematic diagram of a battery pack according to an embodiment of the present application.

Reference numerals are represented as follows:
heat exchange structure 100,
first plate 10, first recess 11, first bottom wall 12, first side wall 13, first protruding edge 14,
second plate 20, second recess 21, second bottom wall 22, second side wall 23, protrusion 24, flow channel groove 25, recessed area 26, cavity 27, second protruding edge 28, flow channel 29,
filler 30,
cushioning member 40,
bottom guard plate 50,
battery cell 200,
cover plate 300,
battery pack 1000.

### DETAILED DESCRIPTION

Various exemplary embodiments of the present application will now be described in detail with reference to the accompanying drawings. It will be noted that the relative arrangement, numerical expressions, and values of the components and steps described in these embodiments do not limit the scope of the present application unless otherwise specified.

The following description of at least one exemplary embodiment is merely illustrative and should not be construed as any limitation on the present application or its application or use.

The techniques, methods, and equipment known to a person having ordinary skill in the relevant art may not be discussed in detail, but in appropriate circumstances, such techniques, methods, and equipment should be considered as part of the specification.

In all the examples shown and discussed here, any specific value should be interpreted as merely illustrative and not restrictive. Therefore, other examples of exemplary embodiments may have different values.

It should be noted that similar labels and letters represent similar items in the following figures. Therefore, once an item is defined in one figure, it does not need to be further discussed in subsequent figures.

In the specification and claims of this application, if the terms "first" or "second" are involved, one or more of these features may be explicitly or implicitly included. In the description of this application, unless otherwise specified, the meaning of "multiple" refers to two or more. In addition, in the specification and claims, "and/or" represents at least one of the connected objects, and the character "/" generally indicates a "or" relationship between the related objects.

In the description of this application, it will be understood that if the terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" are used to indicate the orientation or position relationship based on the orientation or position relationship shown in the accompanying drawings, it is only for the convenience of describing this application and simplifying the description, and it does not indicate or imply that the device or component referred to must have a specific orientation, be constructed and operated in a specific orientation, and therefore will not be understood as a limitation of the present application.

In the description of this application, it will be noted that unless otherwise specified and limited, the terms "installation", "connected", and "connection" will be broadly understood. For example, it can be a fixed connection, a detachable connection, or an integrated connection; it can be a mechanical connection or an electrical connection; it can be directly connected, indirectly connected through an intermediate medium, or connected internally between two components. For a person having ordinary skill in the art, the specific meanings of the above terms in this application will be understood according to the specific situation.

The heat exchange structure 100 according to the embodiments of the present application will be described in detail with reference to the accompanying drawings.

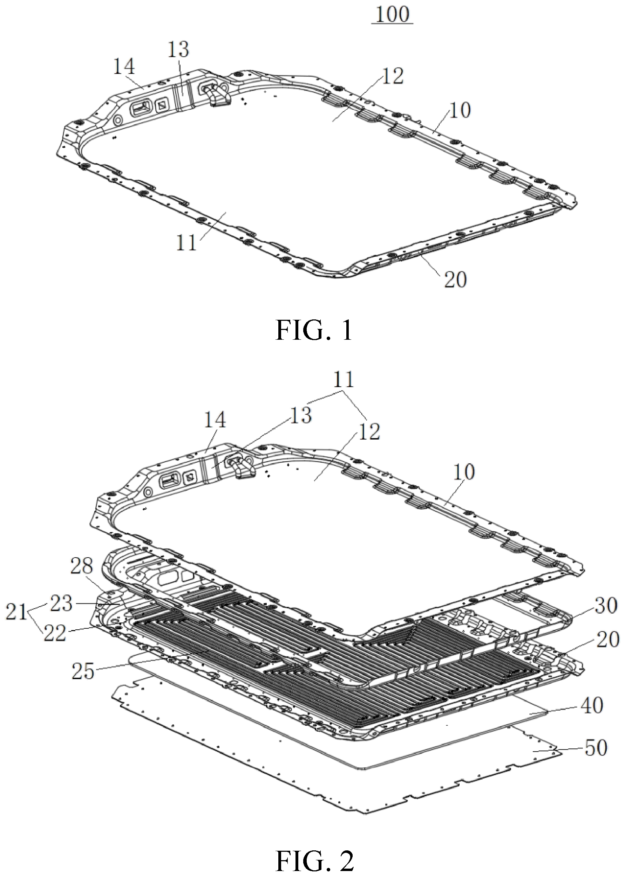

With reference to FIG. 1 to 3, the heat exchange structure 100 according to the embodiments of this application includes a first plate 10 and a second plate 20.

Specifically, a first recess 11 is arranged in the first plate 10, the first recess 11 has a first bottom wall 12 and a first side wall 13. A second recess 21 is arranged in the second plate 20, the second recess 21 has a second bottom wall 22 and a second side wall 23, the first bottom wall 12 and the second bottom wall 22 is at least partially spaced apart to form a flow channel 29, the first side wall 13 is connected to the second side wall 23, and the first recess 11 of the first plate 10 is configured to contain battery cells 200.

In other words, referring to FIG. 1 to 3, the heat exchange structure 100 according to the embodiments of this application consists of a first plate 10 and a second plate 20. As shown in FIGs 1 and 2, a first recess 11 is arranged in the first plate 10, the first recess 11 has a first bottom wall 12 and a first side wall 13. The first bottom wall 12 and the first side wall 13 constitute the first plate 10 with the first recess 11. The first recess 11 of the first plate 10 can be configured to accommodate the battery cells 200. A second recess 21 is arranged in the second plate 20, the second recess 21 has a second bottom wall 22 and a second side wall 23. The second bottom wall 22 and the second side wall 23 constitute the second plate 20 with the second recess 21. By connecting and enclosing the first side wall 13 and the second side wall 23 to form a double-layer frame, the strength requirements for impact resistance of tray profile frames in the prior art are achieved, avoiding the problem of insufficient strength of single-layer side walls and the need for additional reinforcement structures.

The first plate 10 is arranged on the second plate 20, and the first bottom wall 12 corresponds to the second bottom wall 22. The first bottom wall 12 and the second bottom wall 22 are at least partially spaced apart to form a flow channel 29. A circulating cooling liquid, such as cooling water or other cooling media, can be introduced into the flow channel 29. The cooling and heat dissipation of the battery cells 200 in the first recess 11 can be achieved by utilizing the cooling liquid in the flow channel 29.

In this application, the heat exchange structure 100 with the flow channel 29 composed of the first plate 10 and the second plate 20 can not only serve as a cooler to achieve cooling and heat dissipation of the battery cells 200, but also as a heater to heat the battery cells 200. It can also be used as a tray to install and accommodate the battery cells 200. Therefore, the heat exchange structure 100 of the present application integrates the first plate 10 and the second plate 20 into a structure that can achieve dual functions of a tray and a cooler, eliminates the tray structure, reduces weight and cost, and has good overall air tightness.

In the prior art, the cooler and the tray are two separate structures, with the cooler cooling and dissipating heat from the battery cells 200 inside the tray. The tray is usually made of aluminum-alloy extruded profiles that are welded together. The cooler is welded to the tray profile frame to dissipate heat from the battery cells 200. The profile frame is heavy, costly, and the weld seam between the cooler and the tray has poor air tightness. This application directly designs the heat exchange structure 100 into a tray-like shape, achieving diversification of the heat exchange structure's 100 functions without the need for a separate tray. This solves the problems in the prior art such as the separate setup of trays, which results in heavy weight, high cost, and poor air tightness. At the same time, the first side wall 13 and the second side wall 23 are connected and enclosed to form a double-layer frame, meeting the strength requirements for impact resistance of tray profile frames in the prior art, and avoiding the problem of insufficient strength of single-layer side walls and the need for additional reinforcement structures.

Based on this, according to the heat exchange structure 100 of the embodiment of the present application, by arranging a first recess 11 in the first plate 10 and a second recess 21 in the second plate 20, the first bottom wall 12 of the first recess 11 and the second bottom wall 22 of the second recess 21 spaced apart to form a flow channel 29, and the first plate 10 and the second plate 20 constitute a cooler. At the same time, the battery cells 200 are placed in the first recess 11 to achieve cooling and heat dissipation. The first plate 10 and the second plate 20 are integrated into a heat exchange structure 100 with dual functions of a tray and a cooler, eliminating the tray structure, reducing weight and cost, and improving the air tightness of the heat exchange structure 100.

According to one embodiment of the present application, a protrusion 24 is arranged at the second bottom wall 22, the protrusion 24 abuts against the first bottom wall 12, and the first bottom wall 12 and the protrusion 24 are at least partially spaced apart to form the flow channel 29.

That is to say, referring to FIG. 2, FIG.5 and FIG.6, the protrusion 24 is arranged at the second bottom wall 22 of the second recess 21, which is in a large concave-convex shape. The protrusion 24 on the second bottom wall 22 can abut against the first bottom wall 12. Moreover, the first bottom wall 12 of the first plate 10 and the protrusion 24 are at least partially spaced apart to form a flow channel 29 for transmitting cooling liquid, thereby achieving heat dissipation for the battery cells 200 inside the first recess 11. The protrusion 24 and the bottom wall of the first plate 10 can be connected by brazing or other methods. After brazing, failure reshaping can be performed to obtain higher structural strength and improve the overall structural stability and air tightness of the heat exchange structure 100.

According to one embodiment of the present application, a flow channel groove 25 is arranged on the protrusion 24, and the flow channel groove 25 and the first bottom wall 12 jointly define the flow channel 29.

In other words, referring to FIG. 2, FIG.5 and FIG. 6, a flow channel groove 25 can be arranged on the protrusion 24, and the flow channel groove 25 and the first bottom wall 12 can jointly define the flow channel 29. By circulating cooling liquid through the flow channel 29, the heat from the battery cell 200 inside the first recess 11 is carried away, achieving heat dissipation for the battery cell 200.

According to one embodiment of the present application, the protrusions 24 are plurality in number, and each protrusion 24 extends along the curve of the second bottom wall 22.

That is to say, the protrusions 24 can be configured as a plurality, and each protrusion 24 can extend along the curve of the second bottom wall 22, as shown in FIG. 2. The flow channel groove 25 on each protrusion 24, together with the first bottom wall 12, respectively define a plurality of flow channels 29. The area enclosed by the plurality of flow channels 29 is approximately equivalent to the area of the first bottom wall 12 of the first recess 11, ensuring uniform heat dissipation for the battery cells 200 inside the first recess 11, thereby further improving the heat dissipation efficiency of the heat exchange structure 100.

In this application, the plurality of flow channels 29 can be U-shaped, circular, or other shapes. The specific shape of the flow channels 29 can be specifically set according to actual needs, and will not be elaborated in detail in this application.

According to one embodiment of the present application, the part of the second bottom wall 22 excluding the protrusion 24 is spaced apart from the first bottom wall 12 to form a cavity 27, and a filler 30 is arranged inside the cavity 27.

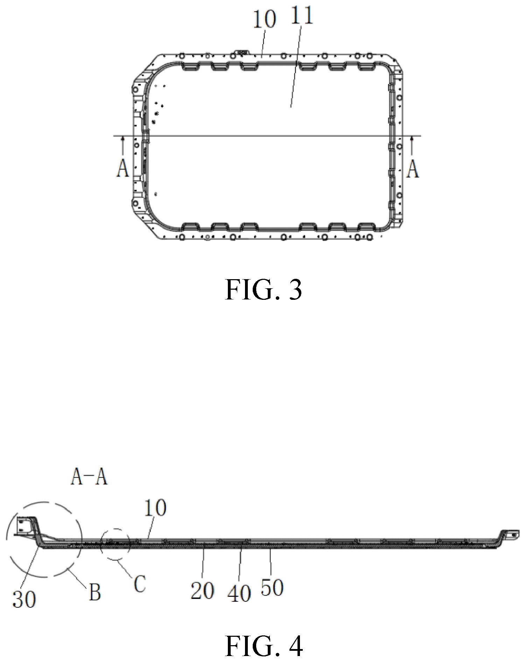

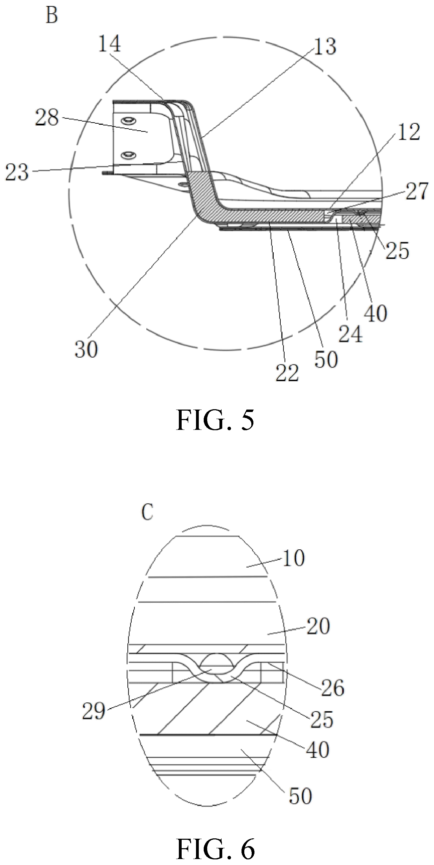

In other words, referring to FIG. 4 and FIG. 5, the part of the second bottom wall 22 excluding the protrusion 24 can be spaced apart from the first bottom wall 12 to form a cavity 27. A filler 30 can be arranged inside the cavity 27. By arranging a filler 30 inside the cavity 27, the load-bearing capacity of the first plate 10 and the second plate 20 can be further enhanced, increasing the load-bearing strength of the heat exchange structure 100. This ensures that the overall structure remains more stable after the heat exchange structure 100 is installed with the battery cells 200.

According to one embodiment of the present application, the first side wall 13 and the second side wall 23 are partially spaced apart, and the second bottom wall 22 and the second side wall 23 cooperate with the first bottom wall 12 and the first side wall 13 to form the annular cavity 27, the filler 30 is an annular filling block corresponding to the annular cavity 27.

That is to say, referring to FIG. 2 and FIG. 5, the first side wall 13 and the second side wall 23 can be partially spaced apart, and the second bottom wall 22 and the second side wall 23 cooperate with the first bottom wall 12 and the first side wall 13 to form the annular cavity 27. Among them, the annular cavity 27 can be located approximately at the connection position between the second bottom wall 22 and the second side wall 23 of the second plate 20. The connection position between the second bottom wall 22 and the second side wall 23 of the second plate 20 will be understood as the edge position at the bottom of the second recess 21. The annular cavity 27 is recessed downward relative to the first bottom wall 12 of the first plate 10, and the filler 30 is arranged as an annular filler block corresponding to the annular cavity 27 (referring to FIG. 2). The annular filler block is filled in the annular cavity 27, effectively increasing the load-bearing strength of the heat exchange structure 100.

Among them, by connecting and enclosing the first side wall 13 and the second side wall 23 to form a double-layer frame, the strength requirements for impact resistance of tray profile frames in the prior art are achieved, avoiding the problem of insufficient strength of single-layer side walls and the need for additional reinforcement structures.

The filler 30 in this application can be made of foaming agent or foaming filler rubber. By setting up the filler 30, it can not only improve the load-bearing capacity of the heat exchange structure 100, but also provide good protection for the heat exchange structure 100 due to its light weight, thermal insulation, cushioning, and impact resistance performance.

According to one embodiment of the present application, the side of the second bottom wall 22 facing away from the first bottom wall 12 is formed with a recessed area 26 corresponding to the protrusion 24, and a cushioning member 40 is arranged within the recessed area 26.

That is to say, referring to FIG. 2 and FIG. 6, the side of the second bottom wall 22 facing away from the first bottom wall 12 (the bottom surface of the second plate 20) is formed with a recessed area 26. The recessed area 26 corresponds to the protrusion 24 on the second bottom wall 22, forming a concave-convex structure on the second bottom wall 22 of the second plate 20, further enhancing the overall structural strength of the second plate 20. Referring to FIG. 2, a cushioning member 40 can be arranged within the recessed area 26. By filling the recessed area 26 of the second bottom wall 22 with the cushioning member 40, it provides thermal insulation, impact resistance, and light weight properties, effectively protecting the bottom of the battery cell 200.

According to one embodiment of the present application, the side of the second bottom wall 22 facing away from the first bottom wall 12 is formed with a recessed area 26 corresponding to the protrusion 24, a cushioning member 40 is arranged on the side of the second bottom wall 22 facing away from the first bottom wall 12, and a part of the cushioning member 40 is located within the recessed area 26.

In other words, referring to FIG. 2, FIG. 5 and FIG. 6, the side of the second bottom wall 22 facing away from the first bottom wall 12 (the bottom surface of the second plate 20) is formed with a recessed area 26 corresponding to the protrusion 24. A cushioning member 40 is arranged on the side of the second bottom wall 22 facing away from the first bottom wall 12. The cushioning member 40 can be made of foam board or other structures with cushioning functions. The cushioning member 40 can be designed as a plate structure, covering the bottom of the second plate 20, and at the same time, a part of the cushioning member 40 can be filled in the recessed area 26. The cushioning member 40 has properties such as thermal insulation, cushioning, impact resistance, and light weight, which can effectively protect the bottom of the battery cell 200. The cushioning member 40 can be made of thermal insulation and impact resistant materials. The specific shape and thickness of the cushioning member 40 can be specifically set according to actual needs, and will not be elaborated in this application.

In this application, the first plate 10 is a temperature-equalizing plate, and the second plate 20 is a flow channel plate. The first plate 10 and the second plate 20 can be integrally stamped and formed from aluminum plates, integrating the two plates. The first plate 10 and the second plate 20 constitute a heat exchange structure 100 with flow channels 29, which can not only serve as a cooler to achieve cooling and heat dissipation for the battery cells 200, but also function as a tray to install and accommodate the battery cells 200. Therefore, the heat exchange structure 100 of this application integrates the first plate 10 and the second plate 20 into a structure capable of achieving dual functions as a tray and a cooler, eliminating the tray structure and reducing weight and cost.

The welding process of the first plate 10 and the second plate 20 can eliminate the self-fusion welding technique. Instead, the temperature-equalizing plate (first plate 10) and the flow channel plate (second plate 20) can be integrally bonded and brazed together. This brazing process does not compromise the strength of the wood. After brazing, the entire structure can be straightened and shaped to control deformation and achieve higher strength. Simultaneously, a gap (cavity) is reserved around the temperature-equalizing plate and the flow channel plate for filling with a foaming agent (filler 30), which can significantly enhance the overall load-bearing strength of the heat exchange structure 100. The heat exchange structure 100 of this application replaces traditional trays for supporting the battery cells 200, while also providing cooling and heat dissipation performance. The bottom of the second plate 20 can be coated with protective materials (such as cushioning member 40), which possesses thermal insulation, cushioning, impact resistance, and light weight properties, effectively protecting the bottom of the battery cell 200.

According to one embodiment of the present application, referring to FIG. 2, the heat exchange structure 100 further includes a bottom guard plate 50, the bottom guard plate 50 is connected to the side of the second bottom wall 22 facing away from the first bottom wall 12. In other words, the heat exchange structure 100 further includes a bottom guard plate 50, the bottom guard plate 50 is arranged on the bottom surface of the second plate 20. By assembling the bottom guard plate 50, the bottom of the heat exchange structure 100 can be well protected, achieving excellent bottom protection effect.

According to one embodiment of the present application, the bottom guard plate 50 is fixedly connected to the part of the second bottom wall 22 excluding the recessed area 26, and the bottom guard plate 50 is adhesively connected to the cushioning member 40.

That is to say referring to FIG. 2, the bottom guard plate 50 can be fixedly connected to the part of the second bottom wall 22 excluding the recessed area 26. The connection between the bottom guard plate 50 and the second bottom wall 22 of the second plate 20 can be established through bolt connection, welding, or other types of fixed connections, ensuring a stable connection between the bottom guard plate 50 and the second plate 20 and enhancing the overall stability of the heat exchange structure 100. The bottom guard plate 50 can be adhesively connected to the cushioning member 40, providing effective protection for the battery cell 200.

According to one embodiment of the present application, a first protruding edge 14 extending away from the first recess 11 is arranged on the first side wall 13 of the first plate 10, and a second protruding edge 28 extending away from the second recess 21 is arranged on the second side wall 23 of the second plate 20, the first protruding edge 14 and the second protruding edge 28 are connected and configured for connecting to external structures.

That is to say, referring to FIG. 1 and FIG. 2, a first protruding edge 14 is arranged on the first side wall 13 of the first plate 10, the first protruding edge 14 extends away from the first recess 11. A second protruding edge 28 is arranged on the second side wall 23 of the second plate 20, the second protruding edge 28 extends away from the second recess 21. By arranging a first protruding edge 14 on the first plate 10 and a second protruding edge 28 on the second plate 20, the first plate 10 and the second plate 20 are respectively configured into a boat-shaped structure. The first protruding edge 14 and the second protruding edge 28 are interconnected. The provision of the first protruding edge 14 and the second protruding edge 28 facilitates the installation and overlapping of the first plate 10 and the second plate 20, improves the structural stability and sealing performance after the connection of the first plate 10 and the second plate 20, and also facilitates the installation and overlapping of the first plate 10 and the second plate 20 with external structures.

According to one embodiment of the present application, the second protruding edge 28 is arranged on the side of the first protruding edge 14 close to the second bottom wall 22, the first protruding edge 14 and the second protruding edge 28 are arranged opposite each other, enabling the first protruding edge 14 and the second protruding edge 28 to be stacked. The first protruding edge 14 and the second protruding edge 28 are fixedly connected. In some embodiments, the first protruding edge 14 and the second protruding edge 28 can be connected by brazing, which not only enhances the stability of the connection between the first plate 10 and the second plate 20, but also ensures the sealing of the connection between the first plate 10 and the second plate 20. At the same time, by providing the first convex edge 14 and the second convex edge 28, it is also beneficial for the installation and overlapping of the first plate 10 and the second plate 20 with external structures.

In summary, according to the heat exchange structure 100 of the embodiment of this application, by arranging a first recess 11 in the first plate 10 and a second recess 21 in the second plate 20, the first bottom wall 12 of the first recess 11 and the second bottom wall 22 of the second recess 21 spaced apart to form a flow channel 29, and the first plate 10 and the second plate 20 constitute a cooler. At the same time, the battery cells 200 are placed in the first recess 11 to achieve cooling and heat dissipation. The first plate 10 and the second plate 20 are integrated into a heat exchange structure 100 with dual functions of a tray and a cooler, eliminating the tray structure, reducing weight and cost, and improving the air tightness of the heat exchange structure 100. At the same time, by installing the cushioning member 40, which possesses thermal insulation, cushioning, impact resistance, and light weight properties, effective protection can be provided to the bottom of the battery cell 200. Additionally, by assembling the bottom guard plate 50, good protection can be achieved for the bottom of the heat exchange structure 100, resulting in excellent bottom protection.

Of course, for a person having ordinary skill in the art, other structures and their working principles of the heat exchange structure 100 are understandable and achievable, and will not be elaborated in detail in this application.

According to the second aspect of the present application, a battery pack 1000 is provided, which includes the heat exchange structure 100 described in the aforementioned embodiment. Since the heat exchange structure 100 according to the embodiment of the present application has the aforementioned technical effects, the battery pack 1000 according to the embodiment of the present application can also achieve corresponding technical effects. That is, the battery pack 1000 of the present application adopts the heat exchange structure 100, by arranging a first recess 11 on the first plate 10 of the heat exchange structure 100 and a second recess 21 on the second plate 20 of the heat exchange structure 100, the first bottom wall 12 of the first recess 11 and the second bottom wall 22 of the second recess 21 spaced apart to form a flow channel 29, and the first plate 10 and the second plate 20 constitute a cooler. At the same time, the battery cells 200 are placed in the first recess 11 to achieve cooling and heat dissipation. The first plate 10 and the second plate 20 are integrated into a heat exchange structure 100 with dual functions of a tray and a cooler, eliminating the tray structure, reducing weight and cost of the battery pack 1000. At the same time, by installing the cushioning member 40, which possesses thermal insulation, cushioning, impact resistance, and light weight properties, effective protection can be provided to the battery pack 1000. Additionally, by assembling the bottom guard plate 50, good protection can be achieved for the bottom of the battery pack 1000, resulting in excellent bottom protection, and enhancing the thermal insulation, cushioning, and impact resistance performance of the battery pack 1000.

According to one embodiment of the present application, the battery pack 1000 further includes a battery cell 200 and a cover plate 300.

In some embodiments, the battery cell 200 is installed and arranged within the first recess 11. The cover plate 300 is covered on the first plate 10.

That is to say, the battery pack 1000 further includes a battery cell 200 and a cover plate 300. Among them, the battery cell 200 can be installed and arranged within the first recess 11. The heat exchange structure 100 with the flow channel 29 composed of the first plate 10 and the second plate 20 can not only serve as a cooler to achieve cooling and heat dissipation of the battery cells 200, but also as a tray to install and accommodate the battery cells 200. By setting up the filler 30, it can not only improve the load-bearing capacity of the battery pack 1000, but also provide good protection for the battery pack 1000 due to its light weight, thermal insulation, cushioning, and impact resistance performance. By filling the recessed area 26 of the second bottom wall 22 with the cushioning member 40, the bottom of the battery cell 200 can be effectively protected, further enhancing the safety of the battery pack 1000. The cover plate 300 can be covered on the first plate 10 of the heat exchange structure 100, enclosing the battery cell 200 within the heat exchange structure 100 and ensuring the integrity of the overall structure of the battery pack 1000.

In summary, the battery pack 1000 according to the embodiment of the present application is provided, by arranging a first recess 11 in the first plate 10 of the heat exchange structure 100 and a second recess 21 in the second plate 20 of the heat exchange structure 100, the first bottom wall 12 of the first recess 11 and the second bottom wall 22 of the second recess 21 spaced apart to form a flow channel 29, and the first plate 10 and the second plate 20 constitute a cooler. At the same time, the battery cells 200 are placed in the first recess 11 to achieve cooling and heat dissipation. The first plate 10 and the second plate 20 are integrated into a heat exchange structure 100 with dual functions of a tray and a cooler, eliminating the tray structure, reducing weight and cost of the battery pack 1000. At the same time, by installing the cushioning member 40, which possesses thermal insulation, cushioning, impact resistance, and light weight properties, effective protection can be provided to the battery pack 1000. Additionally, by assembling the bottom guard plate 50, good protection can be achieved for the bottom of the battery pack 1000, resulting in excellent bottom protection, and enhancing the thermal insulation, cushioning, and impact resistance performance of the battery pack 1000.

Of course, for a person having ordinary skill in the art, other structures and their working principles of the battery pack 1000 are understandable and achievable, and will not be elaborated in detail in this application.

According to the third aspect of the embodiments of the present application, an electric device is provided, which includes the heat exchange structure 100 in the above embodiments, or includes the battery pack in the above embodiments. Since the heat exchange structure 100 or battery pack according to the embodiments of the present application has the above technical effects, the electric device according to the embodiments of the present application can also have corresponding technical effects. That is, the electric device of the present application adopts the heat exchange structure 100 or battery pack, by arranging a first recess 11 on the first plate 10 of the heat exchange structure 100 and a second recess 21 on the second plate 20 of the heat exchange structure 100, the first bottom wall 12 of the first recess 11 and the second bottom wall 22 of the second recess 21 spaced apart to form a flow channel 29, and the first plate 10 and the second plate 20 constitute a cooler. At the same time, the battery cells 200 are placed in the first recess 11, achieving cooling and heat dissipation for the battery cells 200 in the battery pack of the electric device. The first plate 10 and the second plate 20 are integrated into a heat exchange structure 100 with dual functions of a tray and a cooler, eliminating the tray structure, reducing weight and cost of the electric device. At the same time, by installing the cushioning member 40, which possesses thermal insulation, cushioning, impact resistance, and light weight properties, effective protection can be provided to the electric device, improving the safety of the electric device. Additionally, by assembling the bottom guard plate 50, good protection can be achieved for the bottom of the battery pack, resulting in excellent bottom protection, and enhancing the thermal insulation, cushioning, and impact resistance performance of the electric device.

Of course, for a person having ordinary skill in the art, other structures and their working principles of the electric device are understandable and achievable, and will not be elaborated in detail in this application.

Although some specific embodiments of the present application have been described in detail through examples, those persons having ordinary skill in the art will understand that the above examples are merely for illustration purposes and are not intended to limit the scope of the present application. those persons having ordinary skill in the art will understand that the above embodiments can be modified without departing from the scope and spirit of the present application. The scope of the present application is defined by the appended claims.

## Claims

1. A heat exchange structure (100), comprising:
a first plate (10), a first recess (11) being arranged in the first plate (10), the first recess (11) having a first bottom wall (12) and a first side wall (13);
a second plate (20), a second recess (21) being arranged in the second plate (20), the second recess (21) having a second bottom wall (22) and a second side wall (23), the first bottom wall (12) and the second bottom wall (22) being at least partially spaced apart to form a flow channel (29), the first side wall (13) being connected to the second side wall (23), and the first recess (11) of the first plate (10) being configured to contain battery cells.

2. The heat exchange structure (100) according to claim 1, wherein
a protrusion (24) is arranged at the second bottom wall (22), the protrusion (24) abuts against the first bottom wall (12), and the first bottom wall (12) and the protrusion (24) are at least partially spaced apart to form the flow channel (29).

3. The heat exchange structure (100) according to claim 2, wherein
a flow channel groove (25) is arranged on the protrusion (24), and the flow channel groove (25) and the first bottom wall (12) jointly define the flow channel (29).

4. The heat exchange structure (100) according to any one of claims 2 to 3, wherein
the protrusions (24) are plurality in number, and each protrusion (24) extends along a curve of the second bottom wall (22).

5. The heat exchange structure (100) according to any one of claims 3 to 4, wherein
a part of the second bottom wall (22) excluding the protrusion (24) is spaced apart from the first bottom wall (12) to form a cavity (27), and a filler (30) is arranged inside the cavity (27).

6. The heat exchange structure (100) according to claim 5, wherein
the first side wall (13) and the second side wall (23) are partially spaced apart, and the second bottom wall (22) and the second side wall (23) cooperate with the first bottom wall (12) and the first side wall (13) to form the annular cavity (27), the filler (30) is an annular filling block corresponding to the annular cavity (27).

7. The heat exchange structure (100) according to claim 6, wherein
a side of the second bottom wall (22) facing away from the first bottom wall (12) is formed with a recessed area (26) corresponding to the protrusion (24), and a cushioning member (40) is arranged within the recessed area (26).

8. The heat exchange structure (100) according to any one of claims 6 to 7, wherein
the side of the second bottom wall (22) facing away from the first bottom wall (12) is formed with a recessed area (26) corresponding to the protrusion (24), a cushioning member (40) is arranged on the side of the second bottom wall (22) facing away from the first bottom wall (12), and a part of the cushioning member (40) is located within the recessed area (26).

9. The heat exchange structure (100) according to any one of claims 7 to 8, further comprising a bottom guard plate (50), the bottom guard plate (50) being connected to the side of the second bottom wall (22) facing away from the first bottom wall (12).

10. The heat exchange structure (100) according to claim 9, the bottom guard plate (50) is fixedly connected to a part of the second bottom wall (22) excluding the recessed area (26), and the bottom guard plate (50) abuts against the cushioning member (40).

11. The heat exchange structure (100) according to any one of claims 1 to 10, wherein
a first protruding edge (14) extending away from the first recess (11) is arranged on the first side wall (13), a second protruding edge (28) extending away from the second recess (21) is arranged on a second side wall (23) of the second plate (20), and the first protruding edge (14) and the second protruding edge (28) are connected and configured for connecting to external structure.

12. The heat exchange structure (100) according to claim 11, wherein
the second protruding edge (28) is arranged on a side of the first protruding edge (14) close to the second bottom wall (22), the first protruding edge (14) and the second protruding edge (28) are arranged opposite each other, and the first protruding edge (14) and the second protruding edge (28) are fixedly connected.

13. A battery pack, comprising the heat exchange structure (100) according to any one of claims 1 to 12.

14. The battery pack (1000) according to claim 13, wherein it further comprises:
a battery cell (200), which is installed and arranged within the first recess (11);
a cover plate (300), wherein the cover plate (300) is covered on the first plate (10).

15. An electric device, comprising the heat exchange structure (100) according to any one of claims 1 to 12; or comprising the battery pack (1000) according to claims 13 or 14.
